# EUROPÄISCHE PATENTSCHRIFT

(11) **EP 0 531 843 B1**
(45) Veröffentlichungstag und Bekanntmachung des Hinweises auf die Patenterteilung: **05.10.1994**
(21) Anmeldenummer: 92114833.4
(22) Anmeldetag: 31.08.1992
(51) Int. Cl.: C04B 35/54

(54) **Blähgraphit enthaltende Formkörper, deren Herstellung und Verwendung**
Shaped bodies containing expanded graphite, their fabrication and use
Corps moulés contenant graphite expanse, leur fabrication et leur utilisation

(30) Priorität: 12.09.1991 DE 4130335
(43) Veröffentlichungstag der Anmeldung: 17.03.1993
(73) Patentinhaber: BAYER AG, 51368 Leverkusen (DE)
(72) Erfinder: von Bonin, Wulf, Dr., W-5068 Odenthal (DE)

(56) Entgegenhaltungen:
- EP-A- 0 458 150
- GB-A- 1 504 841
- US-A- 4 234 638

## Beschreibung

Blähgraphite expandieren bei Erhitzen auf Temperaturen über etwa 150°C um etwa 50 bis über 600 Vol.-%. Diese Blähfähigkeit beruht darauf, daß zwischen den Gitterebenen des Graphits Fremdbestandteile eingelagert sind, die bei Energiezufuhr die Aufweitung der Gitterebenen-Zwischenräume bewirken. Diese Fremdbestandteile können z.B. metallische Gruppen sein, Halogene, OH-Gruppen, Säurereste, SOₓ und/oder NOₓ. Besonders bekannt sind solche Blähgraphite, die sich durch Behandeln von Graphit mit Schwefelsäuren und Salpetersäuren und/oder anderen Oxidationsmitteln, etwa Wasserstoffperoxid, erhalten lassen. Je nachdem, ob es sich um Spezies handelt, die bei der thermischen Expansion mehr SOₓ oder mehr NOₓ freisetzen, spricht man auch von SOₓ oder NOₓ-Blähgraphiten.

Erhitzt man solche Blähgraphite in Pulverform in teilgefüllten geschlossenen Formen auf Temperaturen über 200°C, so expandieren sie und füllen die Form unter Ausbildung von relativ wenig stabilen Formkörpern aus. Auf diese Weise hergestellte Formkörper haben neben ihrer relativ geringen mechanischen Stabilität auch den Nachteil, daß sie aufgrund der Oxidationsempfindlichkeit des Graphits nur bei Temperaturen unter etwa 450°C im Dauergebrauch verwendbar sind.

Man kann diese unerwünschten Eigenschaften der Blähgraphit-Leichtformkörper durch Zusätze von Ammoniumsalzen von sauren Metallphosphaten, insbesondere Ethanolaminsalzen von sauren Aluminiumphosphaten, wesentlich verbessern.

Es hat sich jedoch herausgestellt, daß solcherart hergestellte Formkörper aus Schwefel enthaltenden Blähgraphiten an frischen Schnitt- und Bruchstellen unangenehme Gerüche freisetzen, was insbesondere für die Anwendung in geschlossenen Räumen unerwünscht ist.

Aus der nicht vorveröffentlichten EP-A-458 150 ist ein Verfahren zur Herstellung von Formteilen bekannt, bei dem man zunächst Blähgraphitpulver Kontrolliert auf 140 bis 450°C erhitzt bis es ein Schüttgewicht von 30 bis 500 g/l erreicht hat, dann eine Form zu mindestens 50 Vol.-% mit solchem vorexpandiertem Blähgraphit füllt und durch Erhitzen auf 300 bis 700°C die Expansion des Blähgraphits zu Ende führt.

Aus der GB-A-1 504 841 ist ein Graphitmaterial bekannt, dessen Herstellung folgende Schritte umfaßt: Behandlung von Graphit-Partikeln mit einem Oxidationsmittel, Waschen mit Wasser oder einem wäßrigen Medium, um das Oxidationsmittel zu entfernen, Behandlung mit einer nicht-oxidierenden wäßrigen Losung einer Phosphorsäure oder eines Phosphorsäuresalzes und Erhitzen, um die so behandelten Partikel auf das 20- bis 70-fache zu expandieren (betrachtet als "bulk density ratio" wie dort definiert).

Es wurden nun expandierten Blähgraphit enthaltende Formkörper gefunden, die dadurch gekennzeichnet sind, daß sie zusätzlich saure Phosphate von Bor, Magnesium, Aluminium, Calcium, Strontium, Barium und/oder Zink und zusätzliche Bindemittel, die Siedepunkte über 180°C und Zersetzungspunkte zwischen 180 und 600°C aufweisen und/oder deren Pyrolyseprodukte enthalten.

Die Kombination blähfähige Graphite/saure Metallphosphate läßt die unerwünschten Gerüche überraschenderweise nicht oder nur stark vermindert auftreten. Zur Erzielung guter Bindemitteleigenschaften werden zusätzliche Bindemittel eingesetzt. Solche zusätzlichen Bindemittel können anorganischer oder, vorzugsweise, organischer Natur sein. Solche zusätzlichen Bindemittel können niedermolekular, oligomer oder hochmolekular sein. Zweckmäßigerweise sollten sie bei Temperaturen unter 180°C möglichst wenig flüchtig sein und bei Temperaturen über 180°C in Gegenwart der sauren Metallphosphate und des Blähgraphits nicht zum Abdestillieren neigen, sondern unter Ausbildung weitgehend im entstehenden Formkörper verbleibender Pyrolyseprodukte reagieren. Sie weisen deshalb Siedepunkte über 180°C und Zersetzungspunkte zwischen 180 und 600°C auf.

Als blähfähige Graphite kommen alle Graphite in Frage, die beim Erhitzen auf Temperaturen über 180°C, bevorzugt auf Temperaturen von 200 bis 600°C, expandieren, insbesondere sind SOₓ- und NOₓ-Blähgraphite von Interesse. Es kann sich auch um vorexpandierte, aber noch blähfähige Graphite handeln oder um neutralisierte oder gecoatete Blähgraphite. Verschiedene Blähgraphittypen und/oder verschiedene blähfähige Graphite und/oder verschieden vorexpandierte, noch blähfähige Graphite können auch als Gemische vorliegen.

Es kann sich auch um Gemische von expansionsfähigen und/oder nicht expansionsfähigen Zusatzstoffen mit Blähgraphiten handeln, in denen letztere in Mengen von z.B. 100-5 Gew.-%, vorzugsweise 85-20 Gew.-% in den Gemischen enthalten sein können.

Beispiele für nicht expansionsfähige Zusatzstoffe sind poröse Materialen wie Pulver, Granulate und faserartige Formen von Holz, Stroh, Getreidekörnern, Fruchtkernen, Fruchtschalen, Koks, aufgeblähtem Graphit, Vermikulit, Perlit, Kork, Schaumglas, Blähton, Flugaschen, Glashohlkugeln, Mineralfasergranulaten, Schaumbeton und poröse Teilchen aus organischen Vinylpolymeren, Polyurethanen und sonstigen Polymeren.

Beispiele für nichtporöse, nicht expansionsfähige Zusatzstoffe sind Graphit, Ruß, Stärke, Borax, Steinkohle, Braunkohle, Gläser, Asbest, Kaolin, Kreide, Gesteinspulver, Aluminiumoxid und seine Hydrationsprodukte, Metalle, Polymerpulver, Polymergranulate, Cellulose, Lignin und Bitumina.

Beispiele für expansionsfähige Zusatzstoffe sind expansionsfähige Getreidekörner, Korke, Glimmer, Vermikulite, Perlite, wasserhaltige Alkalisilikate, Borsilikate und Alumosilikate mit einem Expansionsvermögen im Bereich 180 bis 1000°C, vorzugsweise 200 bis 600°C.

Die Typen der angegebenen expansionsfähigen und nicht expansionsfähigen Zusatzstoffe überschneiden sich zum Teil, da beispielsweise Getreidekörner, Kork, Vermikulite etc. sowohl in expandierbaren als auch in nicht expandierbaren Formen vorkommen.

Die Zusatzstoffe können einzeln oder als Gemische eingesetzt werden.

Als saure Phosphate kommen alle noch saure Gruppen enthaltenden Bor-, Magnesium-, Aluminium-, Calcium-, Strontium-, Barium- und Zinksalz von Säuren des Phosphors in Frage. Vorzugsweise werden saure Salze der ortho-Phosphorsäure eingesetzt. Unter den genannten Metallen sind Magnesium, Calcium und Zink, insbesondere aber Aluminium bevorzugt.

Vorzugsweise werden saure Phosphate des Aluminiums verwendet, die durch Umsetzung von 1 Mol Aluminiumhydroxid mit 1,5 und mehr, insbesondere 2,5 bis 3,5 Molen ortho-Phosphorsäure zugänglich sind. Selbstverständlich kann man zur Synthese solcher Salze auch von anderen Aluminiumverbindungen oder von Aluminiummetall ausgehen. Die obengenannte Umsetzung kann man im wässrigen Medium bei z.B. 15 bis 150°C, vorzugsweise 80 bis 120°C stattfinden lassen.

Erfindungsgemäß werden die sauren Phosphate vorzugsweise als solche eingesetzt. Ein Einsatz von Alkalien kann zwar in Betracht gezogen werden, ist aber im allgemeinen in Bezug auf die vorbeschriebene Geruchsentwicklung und in Bezug auf die Wasserbeständigkeit der Formkörper oftmals nicht vorteilhaft.

In den letztlich zur Expansion zu Formteilen eingesetzten Komponentengemischen können die sauren Phosphate z.B. in Mengen von 4 bis 75 Gew.-%, vorzugsweise 15 bis 45 Gew.-% enthalten sein.

Es können auch Phosphatgemische verwendet werden.

Es wurde auch ein Verfahren zur Herstellung von Blähgraphit enthaltenden Formkörpern gefunden, das dadurch gekennzeichnet ist, daß man Blähgraphit und saure Phosphate von Bor, Magnesium, Aluminium, Calcium, Strontium, Barium und/oder Zink in gasdurchlässigen, aber weitgehend geschlossenen Formen auf Temperaturen über 180°C erhitzt.

Die sauren Phosphate und der Blähgraphit oder die Blähgraphit enthaltenden Gemische können z.B. durch Vermischen einer fließfähigen, beispielsweise 20 bis 90, vorzugsweise 50 bis 80 gew.-%igen wäßrigen Phosphatlösung mit den Feststoffen kombiniert werden. Gegebenenfalls kann man anschließend Trocknen. Es ist auch eine Kombination des, gegebenenfalls pulverisierten, Phosphat-Feststoffes mit den anderen Feststoffen in Betracht zu ziehen. Eine weitere Variante ist die Herstellung der sauren Phosphate in Gegenwart von Blähgraphit oder Blähgraphitabmischungen.

Die ebenfalls einzusetzenden zusätzlichen Bindemittel können z.B. in Form wäßriger Emulsionen, Dispersionen, als Lösungen in organischen Lösungsmitteln oder als solche in flüssiger Form oder als gegebenenfalls pulverisierte Feststoffe zusammen mit den sauren Phosphaten oder vor oder nach diesen mit den Blähgraphiten abgemischt werden.

Beispiele für zusätzliche Bindemittel sind Silikatlösungen (z.B. Wasserglas), Kieselsäureester, Kieselsäurepolyester, Titanester, Titanpolyester, Phosphate und/oder Polyphosphate von Ammoniak, Aminen (z.B. Alkanolaminen) oder Metallen, Hexamethaphosphate, Ester und Polyester der Phosphorsäuren, Borate, wasserlösliche und/oder tiefschmelzende (unter 600°C) Silikate und Gläser. Bevorzugt sind Pyrolysekohlenstoffbildner wie Polyalkohole, Zucker, Stärke, Cellulose und sonstige Kohlehydrate, Melassen, Lignin, Kasein, Chitin und ähnliche Naturstoffe, Teere, Kohleslurries, Bitumina, biologische Klärschlämme, Reststoffe (z.B. aus Destillationen der Isocyanatchemie) der Erdöl-, Kohle-, Kunststoff-, Kunstharz-, Lack-, Kollophonium- und/oder Tallölherstellung, Polyisocyanate, Kunstharze, Kunstharzvorstufen und Polymere. Die zusätzlichen Bindemittel können in Pulverform oder in Form von Dispersionen, Schlämmen, Teeren, Slurries, gegebenenfalls aus der Entsorgungs- und Recycling-Wirtschaft eingesetzt werden.

Als besonders gut dosierbar, gut bindend und reproduzierbar zugänglich haben sich Polyester- und Polyetherpolyole und Dispersionen und Latices von Kautschuken und/oder Olefinpolymeren erwiesen, sowie wäßrige Lösungen von Formaldehydharzen und Kohlehydraten sowie Teere und Bitumina.

Die zusätzlichen Bindemittel können in den zur Expansion zu Formteilen eingesetzten Komponentengemischen z.B. in Mengen von 0 bis 85 Gew.-%, vorzugsweise 5 bis 70 Gew.-%, insbesondere 10 bis 40 Gew.-%, enthalten sein.

Die Herstellung der letztlich zur Expansion von Formteilen eingesetzten Komponentengemische kann nach konventionellen Methoden erfolgen. Beispielsweise kann man die blähfahigen Graphite mit den gegebenenfalls mitzuverwendenden Zusatzstoffen in einem Mischaggregat, etwa einem Schaufelmischer, vermischen, dann im gleichen Gerät eine z.B. 20 bis 90, vorzugsweise 40 bis 75 gew.-%ige, wäßrige Lösung des sauren Phosphats und dann das gegebenenfalls in Form einer wäßrigen Dispersion vorliegende Hilfsbindemittel hinzumischen. Das so erhaltene Komponentengemisch kann getrocknet und granuliert oder gemahlen und gesiebt oder direkt in feucht-rieselfähigem Zustand in den Expansionsprozeß eingebracht werden.

Der Expansionsprozeß kann in einer oder mehreren Stufen zum Formteil mit dem vorgesehenen Raumgewicht geführt werden.

Dazu wird das zur Expansion vorgesehene Gemisch in definierter Menge in eine geschlossene, aber für die bei der Expansion entweichenden Gase, Luft und Wasserdampf durchlässige Form eingebracht.

Die Form besteht vorzugsweise aus Keramik oder Metallen. Sie kann mit üblichen Trennmittelzubereitungen, z.B. auf Graphit-, Talkum- oder Kohlehydrat-Basis geschützt werden. Man kann die Formwände gegen Anbackungen auch mit Papieren, Geweben, Lackierungen oder Metallfolien auskleiden. Oft reicht als Trennmittel die auf den Formoberflächen befindliche Oxidschicht aus. Es kommen auch Formen aus anderen Materialien in Betracht, beispielsweise aus Glas, Glaskeramik, Quarz und Kunststoffen.

Die Formen können mit dem expansionsfähigen Gemisch völlig oder teilweise ausgefüllt werden, je nach Dichte und Expansionsfähigkeit des Gemisches.

Aus Gründen der verbesserten Homogenität des erhältlichen Formteils wird der Blähgraphit oder das expansionsfähige Komponentengemisch der erfindungsgemäßen Zusammensetzung vorzugsweise einer Vorexpansion zwischen 180 und 350°C, insbesondere 200 und 300°C, unterzogen und das so auf ein Schüttgewicht zwischen 40 und 250 kg/m³ vorexpandierte Material, gegebenenfalls nach Zusatz von Zusatzstoffen, sauren Phosphaten und zusätzlichen Bindemitteln zur Ausfüllung der Form verwendet. Der nachträglich ablaufende Erhitzungsprozeß führt zu einer Restexpansion, der das in der Form enthaltene Vorexpandat, gegebenenfalls ohne zusätzliche Gesamtexpansion, zu einem mechanisch stabilen Formkörper verdichtet.

Es ist auch möglich und unter Umständen wirtschaftlicher, einen Formkörper durch Expansion eines nicht vorexpandierten Materials herzustellen.

Die Erhitzung wird vorzugsweise in einem Ofen durchgeführt, in den die Form eingebracht wird. Man kann die Form auch direkt beheizen, z.B. induktiv oder mit Hochfrequenz, Mikrowellen oder IR-Strahlung. Hierbei kann die Wärme gegebenenfalls im Substrat selbst erzeugt werden.

Die Expansionstemperaturen liegen über 180°C und können bis 1000°C und mehr betragen. Vorzugsweise liegen sie zwischen 200 und 700°C. Es ist jedoch auch in Betracht zu ziehen, die Expansion nur zwischen 180 und 400°C, insbesondere zwischen 200 und 300°C vorzunehmen, wobei dann Formkörper erhalten werden, die bei weiterem Erhitzen, z.B. mit einer Flamme, noch nachexpandieren können. Solche Formteile sind auf Grund dieser Intumeszenzeigenschaft, insbesondere im Brandschutzbereich von Interesse.

Die so zugänglichen Formkörper haben i.a. Raumgewichte unter 1000 kg/m³, zumeist zwischen 30 und 450 kg/m³, vorzugsweise zwischen 40 und 200 kg/m³. Sie sind mechanisch duktil und aus kartenblattartigen Strukturen aufgebaut. Sie sind zumeist elektrisch leitfähig, d.h. auch als Heizelemente, Mikrowellenfänger, Erdungselemente und Antistaticum verwendbar. Sie eignen sich zur Stoß-, Schall- und Chemikalenabsorption. Sie können zur Abschirmung von elektromagnetischen Wellen und Feldern dienen, sowie als Werkstoffe in der Kerntechnik oder Chemie. Aufgrund der gegebenenfalls vorhandenen Intumeszenzfähigkeit, sowie der Stabiltät bei Beflammung und bei großer Hitze, können die Formkörper Anwendung in der Brandschutztechnik finden. Ihre moderate Wärmeleitfähigkeit macht sie zur geregelten Ableitung und Zuleitung von Wärme (z.B. bei Topfböden, Heizungen, Wärmetauschern, Auspuffanlagen und Katalysatorträgern) und als Träger von elektronischen Bauelementen verwendbar. Die Formkörper lassen sich galvanisieren, bedampfen, beschichten, lackieren und mit Folien, Geweben oder anderen Materialien kaschieren. Wenn die Formenwände, in denen die erfindungsgemäßen Formteile hergestellt wurden mit Vließstoffen, Geweben, Papieren oder Metallfolien, etwa solchen aus Aluminium, ausgekleidet waren, sind die Formteile anschließend, auch 3-dimensional, mit dem ensprechenden Material kaschiert.

Durch entsprechende Variation des Herstellungsverfahrens, z.B. Verwendung von Vorexpandaten verschiedenen Schüttgewichtes zur schichtmäßigen Auffüllung der Formen, lassen sich auch Formteile mit Raumgewichtsgradienten im Querschnitt herstellen, die gegebenenfalls noch mit verschiedenen Deckschichten aus z.B. Aluminium oder Zellwollpyrolysat oder Glas versehen sein können.

Von besonderem Interesse ist die Verwendung erfindungsgemäßer Formkörper zur Isolierung gegen Schall- und schnellen Wärmedurchtritt, zum Schutz vor Brandeinwirkung, Schlag und Stoß, zu Zwecken der elektrischen Stromleitung, zur Absorption und/oder Abschirmung gegen elektrische und elektromagnetische Einwirkungen und/oder gegen chemischen Angriff, zu Zwecken des Behälter- und Gehäusebaus und als Sandwich-Innenlage oder Kompositbestandteil oder - material.

Im folgenden wird die Erfindung beispielhaft erläutert. Die angegebenen Teile und Prozente beziehen sich auf das Gewicht, soweit nichts anderes vermerkt ist.

### Beispiele:

### Allgemeines

Als saure Phosphatlösung (AlP) wurde eine 50 %ige wäßrige Lösung eines Phosphates verwendet, das durch Auflösen von 1 Mol Aluminiumhydroxid in 3 Mol ortho-Phosphorsäure in wäßrigem Medium bei 90 bis 120°C erhältlich ist.

Als ein zusätzliches Bindemittel wurde ein 50 %iger Kunststofflatex eines Styrol-Butadien-Copolymerisates (Baystal® P 1300; Bayer AG) verwendet (HB).

Als ein anderes zusätzliches Bindemittel wurde ein pulverisiertes Hartbitumen des Handels verwendet (HBZ).

Als Zusatzstoff wurde ein Fettkohlepulver mit mittlerem Korndurchmesser von 2 mm verwendet, das unter Ausbildung eines porösen Kokses pyrolysierte (Z).

Als Maß für die mechanische Festigkeit der erhaltenen Formteile wurde die spezifische Eindruckfestigkeit benutzt. Diese wurde errechnet als Quotient aus der an 5 Deckfolien-freien Materialproben gemessenen durchschnittlichen Eindrucksfestigkeit (Stempel mit einer Kreisfläche von 5 mm Durchmesser) in kg/cm² und dem Raumgewicht der Probe in g/cm³. Sie wird mit EF bezeichnet.

Als Blähgraphit wurde ein SOₓ-Blähgraphit des Handels verwendet, der bei 400°C eine Volumenexpansion von 1:100 aufwies (BG).

Zur Herstellung von Musterplatten wurde eine mit Aluminium-Haushaltsfolie ausgekleidete Plattenform aus Stahl verwendet, die ein lichtes Innenmaß von 11,6 x 11,6 x 2 cm besaß, das dem Maß der damit hergestellten Musterplatten entsprach. Kurzbezeichnung: Form und Platte.

### I. Vergleichsbeispiele

### I.1:

In die Form wurden 29 g BG eingefüllt, dann wurde auf 600°C 3 Stunden lang erhitzt und abgekühlt. Man erhielt eine Platte mit einer EF von 43.

### I.2:

Bei 250°C wurde der BG vorexpandiert, Schüttgewicht dann 100 g/l. Mit dem Vorexpandat wurde die Form gefüllt (28 g), dann wurde für 3 Stunden auf 600°C erhitzt. Nach Abkühlung konnte die Platte nicht entformt werden, da das Material keinen Zusammenhalt hatte.

Bei den Beispiele I.1 und I.2 wurde beim Öffnen der Form und beim Bruch der Platte kein unangenehmer Geruch festgestellt.

### I.3:

500 Teile BG wurden mit 300 Teilen AlP und dann mit 120 Teilen Monoethanolamin auf einem Schaufelmischer vermischt. Dann wurde getrocknet und auf einen mittleren Korndurchmesser von 2,5 mm vermahlen. Die Form wurde mit 30 g des Granulats gefüllt und analog I.1 und I.2 auf 600°C gebracht Nach dem Abkühlen erhielt man eine stabile Platte mit einem Raumgewicht von ca. 100 kg/m³ und einer EF von 118.

### I.4:

Das Granulat aus I.3 wurde bei 215°C zu einem Schüttgewicht von ca 100 g/l vorexpandiert. Man füllte 29 g in die Form und erhitzte auf 600°C. Die aus diesem Vorexpandat hergestellte Platte war stabil und hatte eine EF von 119.

Im Gegensatz zu I.1 und I.2 wurde an Bruchstellen der Platten aus I.3 und I.4 ein H₂S-artiger Geruch festgestellt.

### I.5:

500 Teile BG wurden mit 300 Teilen 50 %iger ortho-Phosphorsäure vermischt, getrocknet und granuliert. Das Granulat (29 g) wurde in der Form bei 600°C zu einer Platte verarbeitet. Die Platte wies eine EF von unter 50 und keinen H₂S-artigen Geruch mehr auf, hatte aber einem unakzeptabel niedrigen pH-Wert von unter 2, wenn sie mit Wasser in Berührung gebracht wurde.

### I.6:

Bei der Herstellung des Granulates analog I.5 wurde eine 50 %ige Lösung eines Salzes aus 100 Teilen ortho-Phosphorsäure und 110 Teilen Ethanolamin eingesetzt. Aus dem Granulat wurden zwar Platten mit einer EF von 110 erhalten, diese zeigten aber an frischen Schnitt- und Bruchstellen stark den H₂S-artigen Geruch und hatten ebenfalls im Kontakt mit Wasser zu stark sauren Charakter (pH-Wert von ca. 2).

### II. Erfindungsgemäße Beispiele

### II.1.1:

Es wurde wie bei I.5 gearbeitet, jedoch statt ortho-Phosphorsäure AlP und zusätzlich zu AlP 100 Teile HB eingearbeitet. Man erhielt aus dem Granulat Platten einer EF von 112, der pH-Wert in Wasser lag bei 4, und es wurde kein H₂S-artiger Geruch festgestellt.

### II.1.2:

In einem Schaufelmischer wurde 500 Teile BG mit 300 Teilen AlP und 20 Teilen HB gemischt. Dann wurde getrocknet und zu einem mittleren Korndurchmesser von 2,5 mm vermahlen (granuliert).

Vom Granulat wurden 30 g in die Form gefüllt. Diese wurde verschlossen und im Ofen 1 Stunde auf 600°C erhitzt. Nach dem Abkühlen wurde die Platte entnommen und von den Aluminiumdeckschichten, mit denen die Platte kaschiert worden war, befreit. Dann wurde ein EF von 108, kein Geruch und im Kontakt mit Wasser ein pH-Wert von 4 festgestellt.

### II.1.3:

Aus dem Granulat aus II.1.2 wurde bei 230°C ein Vorexpandat mit einem Schüttgewicht von 100 g/l hergestellt. Davon wurden 29 g in die Form gefüllt und nach Verschluß 1 Stunde auf 600°C erhitzt. Nach dem Abkühlen wurde eine Platte entnommen mit Eigenschaften wie bei II.1.2.

### II.2.1:

Es wurde wie bei II.1.2 gearbeitet, jedoch mit 150 Teilen HB. Man erhielt eine Platte mit einer EF von 112.

### II.2.2:

Es wurde wie bei II.1.3 gearbeitet, jedoch mit 150 Teilen HB. Man erhielt eine Platte mit einer EF von 111.

Das Raumgewicht dieser wie der anderen mit ca. 30 g Material hergestellten Platten lag bei ca. 100 kg/m³.

### II.3:

500 Teile BG wurden mit 300 Teilen AlP und mit 100 Teilen Polyethylenoxid (Molgewicht 1500) bei 80°C gemischt. Dann wurde abgekühlt und granuliert. 30 g Granulat wurden in die Form gefüllt und bei 600°C 1 Stunde expandiert. Man erhielt eine Platte mit einer EF von 102. Verwendete man bei 220°C hergestelltes Vorexpandat (30 g) mit einem Schüttgewicht von 100 g/l, so erhielt man beim Abkühlen eine Platte mit einer EF von 101. In beiden Fällen trat kein Geruch auf und nach Kontakt mit Wasser lag ein pH-Wert von 4,5 vor.

### II.4:

Es wurde wie bei II.3 gearbeitet, jedoch anstelle des Polyethylenoxids ein Adipinsäure-Diethylenglykol-Polyester (Molekulargewicht 2000) verwendet Man erhielt aus Granulat und Vorexpandat je eine Platte mit einer EF von 107, keinem Geruch und einem pH-Wert von 4.

### II.5:

Es wurde wie bei II.3 gearbeitet. Anstelle AlP wurde eine 50 %ige wäßrige Lösung eines bei 90 bis 120°C hergestellten Phosphates aus 1 Mol Aluminiumhydroxid und 2 Mol ortho-Phosphorsäure verwendet. Man erhielt aus Granulat und Vorexpandat je eine Platte mit einer EF von 101, keinem Geruch und einem pH-Wert von 5.

### II.6:

500 Teile BG wurden mit 400 Teilen Phosphatlösung gemäß II.5 vermischt, dann mischte man 100 Teile HB hinzu. Es wurde getrocknet, granuliert und bei 600°C expandiert. Man erhielt eine Platte mit einer EF von 107, keinem Geruch und einem pH-Wert von 5.

### II.7:

Es wurde gearbeitet wie bei II.1.2., jedoch wurden anstelle von HB 100 Teile 50 %ige Invertzuckerlösung verwendet. Man erhielt eine Platte mit einer EF von 112, keinem Geruch und einem pH-Wert von 4.

### II.8:

Es wurde wie bei II.1.2. gearbeitet. Anstelle von HB wurden jedoch 100 Teile 45 %iger abgepreßter Klärschlamm einer kommunalen biologischen Kläranlage eingearbeitet. Man erhielt eine Platte mit einer EF von 110, keinem Geruch und einem pH-Wert von 4,5.

### II.9:

Es wurde analog II.1.2. gearbeitet. Es wurden jedoch 150 Teile HB und zusätzlich 50 Teile expandiertes Perlitgranulat (Raumgewicht 215 kg/m³, Korndurchmesser im Mittel 3,5 mm) eingearbeitet. Man erhielt eine Platte mit einer EF von 120, keinem Geruch und einem pH-Wert von 4,5.

### II.10:

Es wurde wie bei II.9 gearbeitet, anstelle von Perlitgranulat wurde jedoch expandierter Kork (Raumgewicht 90 kg/m³, mittlerer Korndurchmesser 3 mm) verwendet. Man erhielt eine Platte mit einer EF von 109, keinem Geruch und einem pH-Wert von 4.

### II.11:

Es wurde wie bei II.2.1. gearbeitet. Es wurden jedoch noch zusätzlich 200 Teile auf Korndurchmesser unter 3 mm abgesiebtes Hartbitumenpulver eingearbeitet. Die erhaltene Platte hatte eine EF von 120, keinen Geruch und einen pH-Wert von 4. Platten aus einem entsprechenden, bei 230°C hergestellten Vorexpandat hatten eine EF von 119, keinen Geruch und einen pH-Wert von 4.

### II.12:

Es wurde wie bei II.1.2 gearbeitet. Anstelle von 500 Teilen BG wurde jedoch ein Gemisch aus 300 Teilen BG und 200 Teilen Z eingesetzt. Die erhaltene Platte hatte eine EF von 115, keinen Geruch und einen pH-Wert von 4,5.

### II.13:

Es wurde wie bei II.1.2 gearbeitet. Anstelle von 500 Teilen BG wurden jedoch nur 300 Teile eingesetzt. Nach Zumischen des HB wurden noch 200 Teile Z zugemischt. Man erhielt eine Platte mit einer EF von 117, keinem Geruch und einem pH-Wert von 4,5.

### II.14:

Man arbeitete wie bei II.1.3, es wurde jedoch in die Form ein Gemisch aus 20 g Vorexpandat und 9 Teilen Z eingetragen. Man erhielt eine Platte mit einer EF von 110, keinem Geruch und einem pH-Wert von 6.

### III. Beispiele mit Verfahrensvariationen

### III.1:

500 Teile BG wurden mit 200 Teilen 75 %iger AlP-Lösung vermischt. Dann setzte man 100 Teile HB hinzu. Man erhielt ein im Schaufelmischer gut homogenisiertes Feuchtgranulat, von dem 35,3 g feucht in die Form gebracht und in diesem Zustand in einem auf 600°C vorgeheizten Ofen zum Formteil expandiert wurden (1 Stunde). Die resultierende Platte hatte ein Raumgewicht von ca. 100 kg/m³ und eine EF von 113, keinen Geruch und ein pH-Wert von 4.

### III.2:

500 Teile BG wurden mit 300 Teilen AlP gemischt, dann wurde getrocknet, granuliert und bei 230°C vorexpandiert. Das rieselfähige Vorexpandat (650 Teile) wurde im schnell laufenden Schaufelmischer analog III.2 mit 100 Teilen HB besprüht. Das erhaltene Material war krümelig und wurde in einer Menge von 34,5 g in die Form eingefüllt und 1 Stunde bei 600°C expandiert. Die erhaltene Platte hatte eine EF von 113, keinen Geruch und einen pH-Wert von 4.

### III.4:

Das nach III.3 erhaltene feuchte Material wurde im Schaufeltrockner getrocknet. Es hatte dann ein Schüttgewicht von ca. 135 g/l. Es wurde in einer Menge 30 g in die Form gefüllt, die damit nicht vollständig gefüllt war und 1 Stunde bei 700°C expandiert. Man erhielt eine Platte mit einer EF von 110, keinem Geruch und einem pH-Wert von 4.

### III.5:

Das nach III.4 erhaltene Granulat mit einem Schüttgewicht von 135 g/l wurde in einer Menge von 45 g in die Form gepreßt und dann 1 Stunde bei 295°C expandiert. Man erhielt eine feste Platte mit einem Raumgewicht von 150 kg/m³, geruchslos, pH 4, die bei Beflammung mit einer Erdgasflamme an der Beflammungsstelle kräftig intumeszierte. Aus derartigen Platten hergestellte Kabelschotts können insbesondere für den vorbeugenden Brandschutz eingesetzt werden.

### III.6:

500 Teile BG wurden mit 300 Teilen AlP und 100 Teilen HB vermischt. Auf einem Band aus Polyolefin wurde das Material durch einen Mikrowellenofen gefahren, wobei das Material getrocknet und in ein Vorexpandat mit einem Raumgewicht von 250 g/l überführt wurde. Das so erhaltene Material wurde durch nochmaliges Einbringen in den Mikrowellenofen nochmals unter Volumenverdoppelung expandiert und wies dann ein Schüttgewicht von etwa 120 g/l auf. Von diesem Material wurden 45 g in die Form gedrückt, dann wurde verschlossen und bei 580°C zwei Stunden expandiert. Man erhielt eine Platte mit einem Raumgewicht von 150 kg/m³ und einer EF von 142.

Wurden in die Form nur 30 g eingegeben, so erhielt man nach 1 Stunde Expansion bei 320°C eine Platte mit einem Raumgewicht von 99 kg/m³ und einer EF von 112.

Wurden in die Form nur 15 g eingegeben, so erhielt man nach 0,5 Stunden Expansion bei 700°C eine Platte mit einem Raumgewicht von 50 kg/m³, einer EF von 58, keinem Geruch und einem pH-Wert von 4.

Dieser leichte Plattentyp ist, gegebenenfalls in Verbindung mit den Typen, die höhere Raumgewichte aufweisen, besonders für Schallabsorptionszwecke geeignet.

Diese Beispiele insgesamt zeigen, daß a) der unangenehme, H₂S-artige Geruch dann auftrat, wenn Alkanolamin zugegeben war und b) erfindungsgemäße Bindemittelzubereitungen zu Endprodukten führte, die nicht mehr den unangenehmen H₂S-artigen Geruch, aber gute Festigkeiten und akzeptable pH-Werte in Verbindung mit Wasser aufwiesen.

## Patentansprüche

1. Expandierten Blähgraphit enthaltende Formkörper, dadurch gekennzeichnet, daß sie zusätzlich saure Phosphate von Bor, Magnesium, Aluminium, Calcium, Strontium, Barium und/oder Zink und zusätzliche Bindemittel enthalten, die Siedepunkte über 180°C und Zersetzungspunkte zwischen 180 und 600°C aufweisen und/oder deren Pyrolyseprodukte.

2. Verfahren zur Herstellung von Blähgraphit enthaltenden Formkörpern, dadurch gekennzeichnet, daß man Blähgraphit und saure Phosphate von Bor, Magnesium, Aluminium, Calcium, Strontium, Barium und/oder Zink und zusätzliche Bindemittel, die Siedepunkte über 180°C und Zersetzungspunkte zwischen 180 und 600°C aufweisen in gasdurchlässigen, aber weitgehend geschlossenen Formen auf Temperaturen über 180°C erhitzt.

3. Verfahren nach Anspruch 2, dadurch gekennzeichnet, daß man SOₓ- und/oder NOₓ-Blähgraphite einsetzt.

4. Verfahren nach Ansprüchen 2 bis 3, dadurch gekennzeichnet, daß saure Phosphate von Magnesium, Calcium, Zink oder Aluminium eingesetzt werden.

5. Verfahren nach Ansprüchen 2 bis 4, dadurch gekennzeichnet, daß man als zusätzliche Bindemittel Teere, Bitumina, Kohlehydrate, Polymere und/oder Reststoffe einsetzt.

6. Verfahren nach Ansprüchen 2 bis 5, dadurch gekennzeichnet, daß man zunächst eine Vorexpansion bei 180 bis 350°C durchführt und anschließend durch weiteres Erhitzen das in der Form enthaltene Vorexpandat verdichtet.

7. Verwendung von expandierten Blähgraphit enthaltenden Formkörpern nach Anspruch 1 oder hergestellt nach Anspruch 2 für die Isolierung gegen Schall und schnellen Wärmedurchtritt, zum Schutz vor Brandeinwirkung, Schlag und Stoß, zu Zwecken der elektrischen Stromleitung, zur Absorption und/oder Abschirmung gegen elektrische und elektromagnetische Einwirkungen und/oder gegen chemischen Angriff, zu Zwecken des Behälter- und Gehäusebaues und als Sandwich-Innenlage oder Kompositbestandteil oder -material.

## Claims

1. Mouldings containing expanded expandable graphite, characterized in that they additionally contain acid phosphates of boron, magnesium, aluminium, calcium, strontium, barium and/or zinc and additional binders, which have boiling points above 180°C and decomposition points of between 180 and 600°C, and/or pyrolysis products thereof.

2. Process for the production of mouldings containing expandable graphite, characterized in that expandable graphite and acid phosphates of boron, magnesium, aluminium, calcium, strontium, barium and/or zinc and additional binders, which have boiling points above 180°C and decomposition points of between 180 and 600°C, are heated to temperatures above 180°C in moulds which are permeable to gas but largely closed.

3. Process according to Claim 2, characterized in that SOₓ- and/or NOₓ-expandable graphites are employed.

4. Process according to Claims 2 and 3, characterized in that acid phosphates of magnesium, calcium, zinc or aluminium are employed.

5. Process according to Claims 2 to 4, characterized in that tars, bitumens, carbohydrates, polymers and/or residual substances are employed as additional binders.

6. Process according to Claims 2 to 5, characterized in that pre-expansion is first carried out at 180 to 350°C and the pre-expanded product contained in the mould is then compacted by further heating.

7. Use of mouldings containing expanded expandable graphite according to Claim 1 or produced according to Claim 2 for insulation against sound and rapid passage of heat, for protection from the effects of fire, impact and shock, for the purpose of electrical current conduction, for absorption of and/or shielding against electrical and electromagnetic effects and/or against chemical attack, for the purpose of construction of containers and housings and as a sandwich intermediate layer or as a composite constituent or material.

## Revendications

1. Corps moulés contenant du graphite expansible expansé, caractérisés en ce qu'ils contiennent en outre des phosphates acides de bore, de magnésium, d'aluminium, de calcium, de strontium, de baryum et/ou de zinc et des liants supplémentaires, présentant des points d'ébullition supérieurs à 180°C et des points de décomposition de 180 à 600°C, et/ou leurs produits de pyrolyse.

2. Procédé pour fabriquer des corps moulés contenant du graphite expansible, caractérisé en ce que l'on chauffe du graphite expansible et des phosphates acides de bore, de magnésium, d'aluminium, de calcium, de baryum et/ou de zinc et des liants supplémentaires présentant des points d'ébullition supérieurs à 180°C et des points de décomposition de 180 à 600°C, dans des moules perméables aux gaz, mais substantiellement fermés à des températures supérieures à 180°C.

3. Procédé selon la revendication 2, caractérisé en ce que l'on utilise du graphite expansible au SOₓ et/ou au NOₓ.

4. Procédé selon les revendications 2 à 3, caractérisé en ce que l'on utilise des phosphates acides de magnésium, de calcium, de zinc ou d'aluminium.

5. Procédé selon les revendications 2 à 4, caractérisé en ce que l'on utilise comme liants supplémentaires des goudrons, des bitumes, des hydrates de carbones, des polymères et/ou des résidus.

6. Procédé selon les revendications 2 à 5, caractérisé en ce que l'on effectue d'abord une préexpansion à une température de 180 à 350°C et que l'on compacte ensuite le produit préexpansé contenu dans le moule en continuant à chauffer.

7. Utilisation de corps moulés contenant du graphite expansible expansé selon la revendication 1 ou fabriqués selon la revendication 2 pour l'isolation contre le bruit et le transfert rapide de chaleur, pour la protection contre l'action du feu, des coups et des chocs, aux fins de conduction électrique, pour l'absorption et/ou la protection contre les influences électriques et/ou électromagnétiques et/ou contre les attaques chimiques, pour la construction de récipients et de boîtiers et comme couche intérieure sandwich ou comme composant ou matériau composite.
